# EUROPÄISCHE PATENTSCHRIFT

(11) **EP 2 496 624 B1**
(45) Veröffentlichungstag und Bekanntmachung des Hinweises auf die Patenterteilung: **17.09.2014**
(21) Anmeldenummer: 10775804.7
(22) Anmeldetag: 03.11.2010
(51) Int. Cl.: C08G 18/66, B29C 44/10, C08J 9/12, C08J 9/14

(54) **VERFAHREN ZUR HERSTELLUNG EINES POLYURETHANSCHAUMS MITTELS ÜBER- ODER NAHEKRITISCHEN TREIBMITTELS**
METHOD FOR PRODUCING A POLYURETHANE FOAM BY MEANS OF A SUPERCRITICAL OR NEAR-CRITICAL PROPELLANT
PROCÉDÉ DE PRODUCTION D'UNE MOUSSE DE POLYURÉTHANE AU MOYEN D'UN AGENT GONFLANT À L'ÉTAT SUPERCRITIQUE OU PROCHE DU POINT CRITIQUE

(30) Priorität: 06.11.2009 DE 102009053218
(43) Veröffentlichungstag der Anmeldung: 12.09.2012
(73) Patentinhaber: Bayer Intellectual Property GmbH, 40789 Monheim (DE)
(72) Erfinder: LINDNER, Stefan, 50670 Köln (DE); FRIEDERICHS, Wolfgang, 50933 Köln (DE); STREY, Reinhard, 41540 Dormagen (DE); SOTTMANN, Thomas, 50823 Köln (DE); KHAZOVA, Elena, 68169 Mannheim (DE); KRAMER, Lorenz, 51149 Köln (DE); DAHL, Verena, 51429 Bergisch Gladbach (DE); CHALBI, Agnes, 50354 Hürth (DE)
(86) Internationale Anmeldenummer: PCT/EP2010/066744
(87) Internationale Veröffentlichungsnummer: WO 2011/054873

(56) Entgegenhaltungen:
- EP-A2- 0 353 061
- WO-A1-01/98389
- WO-A1-89/05336
- GB-A- 2 365 013
- US-A1- 2004 054 022

## Beschreibung

Die vorliegende Erfindung betrifft ein Verfahren zur Herstellung eines Polyurethanschaums, wobei das eingesetzte Treibmittel im über- oder nahekritischen Zustand vorliegt. Ein weiterer Gegenstand der Erfindung ist ein nach dem erfindungsgemäßen Verfahren erhältlicher nanozellulärer Polyurethanschaum.

Nanozelluläre oder nanoporöse Polymerschaumstoffe sind aufgrund von theoretischen Betrachtungen besonders gute Materialien für die Wärmeisolation. Hierbei liegen die inneren Abmessungen der Schaumstrukturen im Bereich der mittleren freien Weglänge eines Gasmoleküls. Auf diese Weise kann der Anteil des Gases am Wärmetransport verringert werden. Eine häufig in der Wärmedämmung verwendete Polymergruppe sind Polyurethane.

Bei der Herstellung von Polyurethanschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlendioxid, das auch als Treibmittel wirkt.

Der für die Schaumbildung und damit für die spätere Zellgröße des ausgehärteten Schaums entscheidende Schritt ist die Nukleierung von Treibmitteln, da jede Zelle im Schaum aus einer Gasblase entstanden ist. Hierbei ist zu beobachten, dass in der Regel nach der Nukleierung keine neuen Gasblasen entstehen, sondern Treibmittel in bereits bestehende Gasblasen hineindiffundiert.

Die Zugabe von Stabilisatoren unterstützt die Emulgierung der verschiedenen Komponenten, beeinflusst die Nukleierung und verhindert die Koaleszenz der wachsenden Gasblasen. Außerdem beeinflussen sie die Zellöffnung. Bei offenzelligen Schäumen werden die Membranen der wachsenden Poren geöffnet und die Stege der Poren bleiben bestehen.

Ein möglicher Ansatz ist es, ein überkritisches Treibmittel in der Reaktionsmischung zu emulgieren und dann nach einer Druckerniedrigung den Schaum auszuhärten. Als Variante davon ist das POSME-Verfahren (principle of supercritical micro emulsion expansion) bekannt. In diesem liegt das Treibmittel in Form einer Mikroemulsion vor. Mikroemulsionen bilden sich unter bestimmten Bedingungen, welche unter anderem von der Konzentration der Emulgatoren und der Temperatur abhängen. Mikroemulsionen zeichnen sich dadurch aus, dass sie stabil sind und dass die unpolare Phase, also hier das Treibmittel, in sehr kleinen Tröpfchen innerhalb der polaren Phase vorliegen kann. Die Durchmesser solcher Tröpfchen können in einem Bereich von 1 bis 100 Nanometern liegen.

DE 102 60 815 A1 offenbart aufgeschäumtes Material und ein Herstellverfahren für das aufgeschäumte Material. Aufgeschäumtes Material mit Schaumblasen in Nanogröße soll erzeugt werden, ohne dass die Energiebarriere, die üblicherweise bei Phasenumwandlungen und Keimbildungsprozessen auftritt, überwunden werden muss. Verbunden damit ist das Ziel, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat. Grundlage ist die Dispersion eines zweiten Fluids in Form von Pools in einer Matrix eines ersten Fluids. In einem Reaktionsraum liegen das erste Fluid als Matrix und das zweite Fluid in Pools vor. Durch Druck- und/oder Temperaturänderung wird das zweite Fluid in einen nahe- oder überkritischen Zustand mit einer flüssigkeitsnahen Dichte überführt. Somit liegt das zweite Fluid vollständig oder nahezu vollständig in Pools vor, die im gesamten ersten Fluid gleichmäßig verteilt sind. Durch Druckentlastung kehrt das zweite Fluid in einen Zustand gasförmiger Dichte zurück, wobei die Pools zu Schaumblasen in Nanometer-Größe aufgebläht werden. Es muss keine Energiebarriere überwunden werden, noch müssen die Treibmittelmoleküle zu den wachsenden Blasen diffundieren.

Als erstes Fluid wird hier allgemein eine polymerisierbare Substanz vorgeschlagen. Ausdrücklich erwähnt werden jedoch nur Acrylamid, welches zu Polyacrylamid polymerisiert, und Melamin, welches zu Melamin-Harz polymerisiert. Das zweite Fluid sollte aus einer Stoffgruppe von Kohlenwasserstoffen wie Methan oder Ethan, weiterhin Alkanolen, Fluorchlorkohlenwasserstoffen oder CO₂ ausgewählt sein. Weiterhin wird ein amphiphiles Material eingesetzt, welches mindestens einen dem ersten Fluid zugeneigten Block und mindestens einem dem zweiten Fluid zugeneigten Block aufweisen sollte.

Hinsichtlich Polyurethanschäumen offenbart WO 2007/094780 A1 eine Harzzusammensetzung mit einem Polyol, einem mit einer kurzkettigen Verbindung initiierten ethoxylierten/propoxylierten Tensid sowie einem Kohlenwasserstoff als Treibmittel. Durch das ethoxylierte/propoxylierte Tensid wird die Löslichkeit und/oder Kompatibilität des Kohlenwasserstoff-Treibmittels erhöht und die Phasenstabilität der Harzzusammensetzung verbessert. Die Harzzusammensetzung eignet sich zur Reaktion mit polyfunktionellen organischen Isocyanaten für die Herstellung von zellulären Polyurethan- und Polyisocyanuratschäumen.

US 5 484 818 beschreibt die Herstellung von Polyurethanaerogelen wobei einen Druckform und Treibmittelkomponenten in überkritischen Zustand verwendet werden.

Die Tenside werden erhalten durch die Reaktion von Ethylenoxid und Propylenoxid mit einem Initiator aus der Gruppe von Verbindungen mit einem alkylenoxidaktiven Wasserstoff-Atom und einer C₁ bis C₆ aliphatischen oder alicyclischen Kohlenwasserstoffgruppe, Verbindungen mit einem alkylmoxidaktiven Wasserstoff-Atom und einer C₆ bis C₁₀ Aryl- oder Alkylaryl-Kohlenwasserstoffgruppe oder Kombinationen davon. Der Initiator wird vorzugsweise aus der Gruppe der C₁ bis C₆ aliphatischen oder alicyclischen Alkohole, Phenol, C₁ bis C₄ Alkylphenole und deren Kombinationen ausgewählt.

Als Beispiel wird durch Butanol initiiertes Propylenoxid/Ethylenoxid-Tensid genannt Alternativ kann das Tensid auch ein alkoxyliertes Triglycerid-Addukt oder ein ethoxyliertes Derivat eines Sorbitanesters umfassen. Das Treibmittel kann ein C₄ bis C₇ aliphatischer Kohlenwasserstoff, C₄ bis C₇ cycloaliphatischer Kohlenwasserstoff oder eine Kombination davon sein. Als Beispiel werden Pentane genannt.

In den genannten Beispielen wird jedoch keine Polyolzusammensetzung offenbart, in welcher durch die Wahl der Tenside das Treibmittel in Form einer Mikroemulsion vorliegt.

Spezielle Siloxantenside werden unter anderem in US 2005/0131090 A1 behandelt. Offenbart wird hier ein Verfahren zur Herstellung von Polyurethan-Hartschäumen durch Reaktion eines Polyisocyanats und eines Polyols in Gegenwart eines Urethanisierungskatalysators, eines Treibmittels, optional Wasser und eines Silikontensids. Eingesetzte Treibmittel sind C₄- oder C₅-Kohlenwasserstoffe oder ihre Mischungen. Die Treibmittel haben ein mittleres Molekulargewicht von ≤ 72 g/mol und einen Siedepunkt im Bereich von 27,8 bis 50 °C. Das Silikontensid umfasst ein Polyether-Polysiloxan-Copolymer, welches durch die folgende allgemeine Formel dargestellt wird: (CH₃)₃-Si-O- (Si(CH₃)₂-O)ₓ- (Si(CH₃)(R)O)_{y}-Si(CH₃)₃, worin gilt;

R = (CH₂)₃-O-(-CH₂-CH₂-O)ₐ- (CH₂-CH(CH₃) -O)_{b}-R" und worin R" für H, (CH₂)_{z}CH₃ oder C(O)CH₃ steht. Weiterhin gilt: x+y+2 ist 60-130, x/y ist 5-14 und z ist 0-4. Das Gesamtmolekulargewicht des Tensids, basierend auf obiger Formel, ist 7000-30,000 g/mol. Der Gewichtsanteil des Siloxans in dem Tensid beträgt 32-70 Gewichts-%, das mittlere Molekulargewicht BAMW (blend average molecular weight) des Polyetheranteils ist 450-1000 g/mol und der Gehalt an Ethylenoxid, ausgedrückt in mol-%, in dem Polyetheranteil beträgt 70-100 mol-%. Diese Veröffentlichung betrifft jedoch keine Mikroemulsionen oder Treibmittel im überkritischen Zustand. Vielmehr wird das Siloxantensid als Zellstabilisierungsmittel eingesetzt.

US 2004/0054022 beschreibt die Herstellung von Polymethan schäumen mit niedrige Dichte unter Verwendung von Kohlenstoffdioxid in überkritischen Zustand. Dabei wird eine Polymethanhartschaum formulierung unter Umgebungsdruckeingespritzt*.*

GB 2 365 013 A offenbart alkylenoxidmodifizierte Silikonglykole für stabile Polyesterpolyol-Zusammensetzungen. Eine Polyesterpolyol-Zusammensetzung umfasst ein Phthalsäureanhydridinitiiertes Polyesterpolyol, ein C₄-C₆-Kohlenwasserstofftreibmittel und ein alkylenmodifiziertes Silikonglykol-Kompatibiliserungsmittel mit einem HLB-Wert von ungefähr 5 bis ungefähr 8. Das Treibmittel ist in der Polyolzusammensetzung löslich, wodurch das mit solchen Treibmitteln verbundene Risiko in der Herstellung von Polymerhartschaumartikeln verringert wird. Hartschäume mit guter Dimensionsstabilität und verbesserten Isolationseigenschaften werden bereitgestellt. Ebenfalls offenbart wird ein isocyanatmodifiziertes Silikonglykol-Kompatibilisierungsmittel.

In dieser Patentanmeldung wird angegeben, dass in einigen Fällen ein bestimmtes Treibmittel mit dem Polyol und anderen Komponenten eine Mikroemulsion bildet. Allerdings ist nicht offenbart, ob hierbei für das Treibmittel überkritische Bedingungen herrschen. Vielmehr bezieht sich der Hinweis auf Mikroemulsionen auf den Test zur Bestimmung der Lagerstabilität der Polyolzusammensetzungen. In diesem Test werden die Polyolzusammensetzung und das Treibmittel in einem Glas mit Deckel vermischt, geschüttelt und für fünf Tage bei Raumtemperatur gelagert. Wenn keine Phasentrennung auftritt, wird das Treibmittel für in der Polyolzusammensetzung löslich und die Zusammensetzung für lagerstabil befunden. Eine Aufbewahrung in einem Glas mit Deckel bei Raumtemperatur lässt allerdings keine Bedingungen erwarten, unter denen ein C₄-C₆-Kohlenwasserstoff im überkritischen Zustand vorliegt.

Weiterhin wird in dieser Patentanmeldung erwähnt, dass in der Herstellung der Schäume die Ausgangsstoffe bei einer Temperatur von 15 °C bis 90 °C, vorzugsweise von 20 °C bis 35 °C in eine offene oder geschlossene Form eingebracht werden können. Hierbei kann ein Druck oberhalb des Atmosphärendrucks herrschen. Das Mischen des Isocyanats mit der Polyolzusammensetzung, die gelöstes Treibmittel enthält, kann durch Rühren oder unter hohem Druck durch Injektion geschehen. Die Temperatur der Form kann 20 °C bis 110 °C, vorzugsweise 30 °C bis 60 °C und insbesondere 45 °C bis 50 °C betragen. Auch hier finden sich keine Hinweise darauf, dass für das Treibmittel überkritische Bedingungen herrschen.

Wünschenswert wäre dieses, um Schäume mit kleineren Zellabmessungen zu erhalten. Gleichfalls wünschenswert wären neue Verfahren, um solche Schäume herzustellen.

Erfindungsgemäß vorgeschlagen wird daher ein Verfahren zur Herstellung eines Polyurethanschaums, umfassend die Schritte:
- Bereitstellen einer Mischung, umfassend:
   A) eine gegenüber Isocyanaten reaktive Komponente;
   B) eine Tensidkomponente;
   C) eine Treibmittelkomponente ausgewählt aus der Gruppe umfassend lineare, verzweigte oder cyclische C₁- bis C₆-Alkane, lineare, verzweigte oder cyclische C₁-bis C₆-Fluoralkane, N₂, O₂, Argon und/oder CO₂, wobei die Treibmittelkomponente C) im überkritischen oder nahekritischen Zustand vorliegt;
   D) eine Polyisocyanatkomponente;
- Einbringen der Mischung umfassend die Komponenten A), B), C) und D) in eine geschlossene Form, wobei die geschlossene Form so eingerichtet ist, dass deren inneres Volumen und/oder der in ihrem Inneren herrschende Druck nach dem Einbringen der Mischung durch externe Beeinflussung verändert werden kann;
- Verweilen der Mischung umfassend die Komponenten A), B) C) und D) in der geschlossenen Form für eine vorbestimmte Zeitdauer von ≥ 0 Sekunden; und
- Vergrößern des inneren Volumens der geschlossenen Form und/oder Verringern des im Inneren der geschlossenen Form herrschenden Drucks durch externe Beeinflussung.

Durch das erfindungsgemäße Verfahren lassen sich Polyurethanschäume mit besonders kleinen Zellgrößen erhalten. Beispielsweise lassen sich Schäume mit einem mittleren Porendurchmesser von ≥ 10 nm bis ≤ 10000 nm erhalten. Im Verfahren wird überkritisches oder nahekritisches Treibmittel verwendet. Im Rahmen der vorliegenden Erfindung liegen nahekritische Bedingungen dann vor, wenn die folgende Bedingung erfüllt ist: (T_{c} - T)/T ≤ 0,4 und/oder (p_{c} - p)/p ≤ 0,4. Hierbei bedeuten T die im Verfahren herrschende Temperatur, T_{c} die kritische Temperatur des Treibmittels oder Treibmittelgemisches, p der im Verfahren herrschende Druck und p_{c} der kritische Druck für das Treibmittel oder Treibmittelgemisch. Vorzugsweise liegen nahekritische Bedingungen vor, wenn gilt: (T_{c} - T)/T ≤ 0,3 und/oder (p_{c} - p)/p ≤ 0,3 und besonders bevorzugt (T_{c} - T)/T ≤ 0,2 und/oder (p_{c}-p)/p ≤ 0,2. Ohne auf eine Theorie festgelegt zu sein, wird angenommen, dass durch die Wahl von geeigneten Tensidkomponenten sich Emulsionen oder Mikroemulsionen des überkritischen oder nahekritischen Treibmittels in der Phase mit gegenüber Isocyanaten reaktiven Komponenten bilden.

Geeignete Drücke für die Durchführung des erfindungsgemäßen Verfahrens können beispielsweise im Bereich von ≥ 4MPa bis ≤ 30MPa (≥ 40 bar bis ≤ 300 bar) liegen. Geeignete Temperaturen sind beispielsweise ≥ 10 °C bis < 80 °C und vorzugsweise ≥ 25 °C bis ≤ 60 °C. Insbesondere bevorzugt sind Drücke und Temperaturen oberhalb des kritischen Punktes von CO₂, also ≥ 7,33MPa (≥ 73,7 bar) und ≥ 31 °C.

Vorzugsweise unter Beibehaltung der überkritischen oder nahekritischen Bedingungen für das Treibmittel wird die Reaktionsmischung in eine geschlossene Form eingebracht. Die Treibmittelkomponente C) liegt dann beim und nach dem Einbringen im überkritischen oder nahekritischen Zustand vor. Eine geschlossene Form ist hierbei insbesondere als eine Form zu verstehen, in der ein Überdruck gegenüber dem Atmosphärendruck aufgebaut werden kann. Im einfachsten Fall wird über eine gasdichte Einfüllöffnung die Reaktionsmischung in die Form eingebracht. Durch die geschlossene Form wird verhindert, dass zu früh wieder unterkritische Bedingungen für das Treibmittel herrschen.

Die Form ist so eingerichtet, dass deren inneres Volumen und/oder der in ihrem Inneren herrschende Druck nach dem Einbringen der Reaktionsmischung durch externe Beeinflussung verändert werden kann. Dieses bedeutet, dass nicht nur das Eintragen der Reaktionsmischung und eine sich anschließende Reaktion zu einem Schaum das innere Volumen und den Druck der Form verändern. Vielmehr weist die Form noch weitere Möglichkeiten auf, um dieses extern und somit auch kontrolliert zu bewerkstelligen.

Die geschlossene Form ist hierbei nicht ein Teil eines Mischkopfs einer Mischanlage. Vielmehr ist die geschlossene Form eine hiervon verschiedene Form, in der die eingebrachte Reaktionsmischung aushärtet.

In der Form kann ein Gegendruck aufgebaut werden, wenn die Reaktionsmischung eingebracht wird und dieser Gegendruck kann aufrechterhalten werden, solange die Mischung für die vorbestimmte Zeitdauer in der Form verbleibt. Durch den Gegendruck lässt sich Einfluss auf die Expansion des Treibmittels und somit auf die Zellengröße nehmen. Es ist möglich, dass der Gegendruck oberhalb des kritischen Druckes für das benutzte Treibmittel liegt. So kann der Gegendruck beispielsweise ≥ 4MPa bis ≤ 15MPa (≥ 40 bar bis ≤ 150 bar) oder ≥ 7MPa bis ≤ 12MPa (≥ 70 bar bis ≤ 120 bar) betragen. Dieses ist insbesondere bei CO₂ als Treibmittel bevorzugt. Es ist ebenfalls möglich, dass in der Form Temperaturen oberhalb der kritischen Temperatur des jeweiligen Treibmittels herrschen. Dieses kann durch eine externe Heizung erreicht werden. Solche Temperaturen können jedoch auch durch die Reaktionswärme der Polyurethanbildung ohne weiteres Zutun erreicht werden. Die Bereitstellung der Komponenten kann durch eine Polyurethan-Hochdruckanlage erfolgen.

Nach dem Einbringen der Reaktionsmischung in die Form verweilt diese für eine vorbestimmte Zeitdauer von ≥ 0 Sekunden. Auch beim Verweilen der Reaktionsmischung in der Form wird vorzugsweise ein erhöhter Druck aufrechterhalten. Es ist möglich, dass der Gegendruck oberhalb des kritischen Druckes für das benutzte Treibmittel liegt oder dass nabekritische Bedingungen herrschen. So kann der Gegendruck beispielsweise ≥ 4MPa bis ≤ 15MPa (≥ 40 bar bis ≤ 150 bar) oder ≥ 7MPa bis ≤ 12MPa (≥ 70 bar bis ≤ 120 bar) betragen. Dieses ist insbesondere bei CO₂ als Treibmittel bevorzugt. Es ist ebenfalls möglich, dass während des Verweilens in der Form Temperaturen oberhalb der kritischen Temperatur des jeweiligen Treibmittels herrschen oder dass nahekritische Verhältnisse vorliegen. Vorzugsweise findet das Verweilen für ≥ 1 Sekunde bis ≤ 20 Minuten statt. Die Verweildauer kann auch ≥ 1 Minute bis ≤ 12 Minuten betragen. Während der Verweilzeit vernetzt der erhaltene Schaum, ohne dass eine Expansion von Gasbläschen im Schaum die Zellengröße ungewollt erhöhen würde.

Im letzten Schritt des erfindungsgemäßen Verfahrens erfolgt durch externe Beeinflussung eine Druckabsenkung beziehungsweise Volumenvergrößerung in der geschlossenen Form. Im einfachsten Fall beinhaltet dieses das Öffnen der Form. Je nach Verweildauer und Reaktionsfortschritt ist es auch möglich, dass eine langsame, kontrollierte Druckabsenkung die Zellenbildung im Schaum steuert.

Geeignete gegenüber Isocyanaten reaktive Komponenten A) sind insbesondere Polyole, Polyamine, Polyaminoalkohole. und Polythiole.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolal, Pentaerythritoltetrakis(3-mercaptopropionat) und 1,2-Bis((2-mercaptoethyl)thio)-3-mercaptopropan.

Die erfindungsgemäß verwendbaren Polyole können beispielsweise ein zahlenmittleres Molekulargewicht Mₙ von ≥ 62 g/mol bis ≤ 8000 g/mol, bevorzugt von ≥ 90 g/mol bis < 5000 g/mol und mehr bevorzugt von ≥ 92 g/mol bis ≤ 1000 g/mol aufweisen. Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist zum Beispiel ≥ 2, beispielsweise in einem Bereich von > 2 bis ≤ 6, vorzugsweise von ≥ 2,1 bis ≤ 4 und mehr bevorzugt von > 2,2 bis ≤ 3.

Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethmolamin, 1,4-Butandiol, 1,6-Hexandiol sowie niedermolekulare, Hydroxylgruppen aufweisende Ester derartiger Polyole mit Dicarbonsäuren.

Erfindungsgemäß verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactone. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbern steinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Erfindungsgemäß verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Erfindungsgemäß verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis < 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit primären OH-Gruppen und zahlenmittleren Molekulargewichten Mₙ von vorzugsweise > 18 g/mol bis ≤ 400 g/mol oder von > 62 g/mol bis < 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Dccandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von ≥ 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise > 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Für das erfindungsgemäße Verfahren geeignete Tenside unterliegen zunächst hinsichtlich ihrer Auswahl keinen Beschränkungen. Günstigerweise erlauben es die Tenside dem Treibmittel, in der gegenüber Isocyanaten reaktiven Phase Emulsionen oder Mikroemulsionen zu bilden. Tenside sind beispielsweise alkoxylierte Alkanole wie Ether von linearen oder verzweigten Alkanolen mit ≥ 6 bis < 30 Kohlenstoffatomen mit Polyalkylenglykolen mit > 5 bis < 100 Alkylenoxideinheiten, alkoxylierte Alkylphenole, alkoxylierte Fettsäuren, Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Vorzugsweise umfasst die Tensidkomponente B) einen siloxanterminierten Polyalkylenoxid-Polyether. Diese Tenside können linear oder verzweigt aufgebaut sein. Solch ein erfindungsgemäß einzusetzendes Tensid kann beispielsweise durch die Hydrosilylierung einer ungesättigten Verbindung mit einem Polysiloxan, das Si-H Gruppen trägt, erhalten werden. Die ungesättigte Verbindung kann unter anderem das Reaktionsprodukt von Allylalkohol mit Ethylmoxid oder Propylenoxid sein.

Beispielsweise kann das Tensid auch durch die Reaktion von Polyetheralkoholen mit einem Polysiloxan, das Si-Cl Gruppen trägt, erhalten werden. In dem Polyether können sämtliche Endgruppen siloxanterminiert sein. Es ist auch möglich, dass gemischte Endgruppen vorliegen, dass also Siloxanendgruppen und OH-Endgruppen oder durch Reaktion funktionalisierte OH-Endgruppen wie Methoxygruppen vorliegen. Der Siloxanterminus kann eine Monosiloxangruppe R₃Si-O- oder eine Oligo- oder Polysiloxangruppe R₃Si -O-[R₂Si-O]₁-[AO] mit beispielsweise n ≥ 1 bis ≤ 100 sein. Im Fall von verzweigten Tensiden kann der Siloxanterminus auch gemäß R₃Si-O-RSi[AO]-O-[R₂Si-O]ₘ-O-SiR₃ aufgebaut sein mit beispielsweise m ≥ 0 bis < 10 oder als Kammpolymer gemäß R₃Si-O-[RSi[AO]]ₙ-O-[R₂Si-O]ₘ- O SiR₃ mit m+n ≥ 0 bis ≤ 250 aufgebaut sein. Vorzugsweise ist in den genannten Fällen der Rest R eine Alkylgruppe, insbesondere eine Methylgruppe. Die Gruppe [AO] steht für einen Polyalkylenoxidrest, vorzugsweise Polyethylenoxid und/oder Polypropylenoxid. Die Gruppe [AO] kann auch über eine Verbindungsgruppe wie zum Beispiel C₃H₆ an das Siloxan angebunden werden.

Die erfindungsgemäß einsetzbaren Treibmittel C) liegen im überkritischen oder nahekritischen Zustand vor, das heißt, oberhalb der kritischen Temperatur und des kritischen Drucks. Das Treibmittel kann eine eigene Phase in der Reaktionsmischung bilden. Es kann beispielsweise überkritisches Kohlendioxid verwendet werden. Es ist möglich, dass das Kohlendioxid während der Reaktion zum Polyurethanschaum gebildet wird, beispielsweise durch die Reaktion von Isocyanaten mit Wasser oder mit Säuren. Beispiele für weitere Treibmittel sind lineare C₁-C₅-Alkane, verzweigte C₄-C₆-Alkane und cyclische C₃-C₆-Alkane. Spezielle Beispiele für Treibmittel sind Methan, Ethan, Propan, n-Butan, iso-Butan, n-Pentan, Cyclopentan, n-Hexan, iso-Hexan, 2,3-Dimethylhexan und/oder Cyclohexan. Weitere Beispiele sind die teil- oder perfluorierten Derivate von Methan, Ethan, Propan, n-Butan, iso-Butan, n-Pentan, Cyclopentan, n-Hexan, iso-Hexan, 2,3-Dimethylbutan und/oder Cyclohexan.

Der Anteil des Treibmittels in der Reaktionsmischung umfassend Komponenten A), B) und C), aber ohne D), kann beispielsweise ≥ 5 Gewichts-% bis < 60 Gewichts-% betragen. Der Anteil des Treibmittels in der Reaktionsmischung umfassend Komponenten A), B), C) und D) kann beispielsweise ≥ 3 Gewichts-% bis ≤ 60 Gewichts-%, bevorzugt > 4 Gewichts-% bis < 40 Gewichts-% und besonders bevorzugt ≥ 5 Gewichts-% bis ≤ 30 Gewichts-% betragen.

Die Komponente D) ist ein Polyisocyanat, also ein Isocyanat mit einer NCO-Funktionalität von ≥ 2. Folglich liegt nun ein Reaktionsgemisch vor, welches zu Polyurethan- oder aber auch Polyisocyanuratschäumen reagieren kann. Dieses Reaktionsgemisch kann direkt in einem Mischkopf erzeugt werden.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) und/oder höhere Homologe (polymeres MDI), 1,3-und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von > 2 und Polyolen mit einem Molekulargewicht von > 62 g/mol bis < 8000 g/mol und OH-Funktionalitäten von ≥ 1,5 bis ≤ 6.

Selbstverständlich können in der Herstellung des Polyurethanschaums noch weitere übliche Hilfs- und Zusatzstoffe wie Katalysatoren, Flammschutzmittel, Trennmittel, Füllstoffe und dergleichen eingesetzt werden.

Die Anzahl der NCO-Gruppen in der Polyisocyanatkomponente D) und die Anzahl der gegenüber Isocyanaten reaktiven Gruppen der Komponente A) können beispielsweise in einem Zahlenverhältnis von ≥ 50:100 bis ≤ 500:100 zueinander stehen. Diese Kenngröße kann auch in einem Bereich von ≥ 160:100 bis ≤ 330:100 oder aber auch von ≥ 80:100 bis ≤ 140:100 liegen.

In einer Ausführungsform des erfindungsgemäßen Verfahrens liegt beim Verweilen der Mischung umfassend die Komponenten A), B), C) und D) die Treibmittelkomponente C) im überkritischen oder nahekritischen Zustand vor. Weiterhin liegt nach dem Vergrößern des inneren Volumens der geschlossenen Form und/oder Verringern des im Inneren der geschlossenen Form herrschenden Drucks die Treibmittelkomponente C) nicht mehr im überkritischen Zustand vor. Dieses Vorgeben ist vorteilhaft, wenn die kontrollierte Expansion einer Mikroemulsion des überkritischen Treibmittels erreicht werden soll.

In einer weiteren Ausführungsform des erfindungsgemäßen Verfahrens herrscht nach dem Vermischen der Komponenten A), B), C), und D) ein Druck von ≥ 4MPa bis ≤ 15MPa (≥ 40 bar bis ≤ 150 bar). Dieser Zustand kann insbesondere in einem Mischkopf und nach einem Mischkopf herrschen. Der Drucks kann auch ≥ 8MPa bis ≤ 12MPa (≥ 80 bar bis ≤ 120 bar) betragen. Bei solchen Drücken können überkritische Bedingungen für das eingesetzte Treibmittel aufrecht erhalten werden.

In einer Ausführungsform des erfindungsgemäßen Verfahrens umfasst die Komponente A) ein Polyesterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g. Ein geeignetes Polyesterpolyol ist unter anderem mit dem Handelsnamen Desmophen® VP.PU 1431 der Firma Bayer MaterialScience AG erhältlich. Die OH-Zahl des Polyesterpolyols kann auch ≥ 290 mg KOH/g bis ≤ 320 mg KOH/g betragen. Kurzkettige Polyole sind insbesondere Polyole mit ≥ 2 bis ≤ 6 C-Atomen. Bevorzugt ist Glycerin. Dieses hat eine OH-Zahl von 1827 mg KOH/g. Durch die Zugabe des kurzkettigen Polyols lässt sich die Polarität der Polyolphase günstig erhöhen.

In einer weiteren Ausführungsform des erfindungsgemäßen Verfahrens umfasst die Tensidkomponente B) ein Polyethylenoxid-Polyether mit Oligodimethylsiloxan-Endgruppen, wobei die Zahl der Dimethylsiloxan-Einheiten ≤ 5 ist. Solch ein Polyether kann beispielsweise durch die idealisierte Formel R'O-[CH2CH2O]ₒ-X-SiR(O-SiR₃)((O-SiR₂)ₚR) mit R = CH₃ und R' = H, CH₃ oder COCH₃ dargestellt werden. Hierbei kann X eine optionale verbindende Gruppe wie Alkyl-α oder ω-diyl sein, o ist ≥ 1 bis ≤ 100, vorzugsweise ≥ 5 bis ≤ 30 und mehr bevorzugt ≥ 10 bis ≤ 20 und p ist ≤ 2. Die Gruppe X kann beispielsweise -CH₂-CH₂-CH₂- sein. Ein bevorzugtes Tensid ist 3-(Polyoxyethylen)propylheptamethyltrisiloxan. Dieses ist kommerziell von der Firma Dow Corning unter dem Handelsnamen Q2-5211® erhältlich.

In einer weiteren Ausführungsform des erfindungsgemäßen Verfahrens weist die Tensidkomponente B) einen HLB-Wert von > 10 bis < 18 auf. Diese Kenngröße kann auch in einem Bereich von > 11 bis ≤ 16 oder in einem Bereich von > 12 bis < 14 liegen. Der HLB-Wert (hydrophilic-lipophilic-balance) beschreibt den hydrophilen und lipophilen Anteil von hauptsächlich nichtionischen Tensiden. Der HLB-Wert für nichtionische Tenside kann folgendermaßen berechnet werden: HLB = 20 · (1 Mₕ/M), wobei Mₕ die Molmasse des hydrophoben Anteils eines Moleküls ist und M die Molmasse des gesamten Moleküls.

In einer weiteren Ausführungsform des erfindungsgemäßen Verfahrens liegt die Tensidkomponente B) kovalent an eine gegenüber Isocyanaten reaktive Verbindung oder an ein Polyisocyanat gebunden vor. Vorzugsweise erfolgt die Anbindung über eine freie OH-Gruppe des Tensids. Eine kovalente Anbindung an ein Polyol kann beispielsweise im Falle eines Polyesterpolyols durch eine Veresterungsreaktion mit einer Säure-Endgruppe des Polyols erfolge. Die Anbindung an ein Polyisocyanat erfolgt durch Reaktion einer NCO-Gruppe mit einer freien OH-Gruppe des Tensids. Durch die kovalente Anbindung des Tensids an eine Komponente der Polyurethanmatrix wird dieses immobilisiert, so dass ein Austreten aus dem erhaltenen Polyurethanschaum verhindert werden kann.

In einer weiteren Ausführungsform des erfindungsgemäßen Verfahrens ist die Polyisocyanatkomponente D) monomeres und/oder polymeres Diphenylmethan-4,4'-diisocyanat. Solch ein Polyisocyanat ist unter dem Handelsnamen Desmodur ® 44V70L als ein Gemisch von Diphenylmethan-4,4'-diisocyanat (MDI) mit Isomeren und höherfunktionellen Homologen von der Firma Bayer MaterialScience AG erhältlich.

In einer weiteren Ausführungsform des erfindungsgemäßen Verfahrens beträgt in der Mischung umfassend die Komponenten A), B) und C) der relative Gewichtsanteil γ der Tensidkomponente B) an der Gesamtzusammensetzung ≥ 0,05 bis ≤ 0,3. Diese Mischung kann noch weitere, übliche Hilfs- und Zusatzstoffe umfassen. Der Ausdruck "Mischung umfassend A), B) und C)" ist als die fertige Formulierung vor der Zugabe des Polyisocyanats zu verstehen. Vorzugsweise weist weiterhin die Mischung eine Temperatur von > 20 °C bis ≤ 80 °C auf. Unter diesen Bedingungen lassen sich bei möglichst geringem Tensideinsatz Mikroemulsionen des Treibmittels in der Polyolphase erwarten. Der γ-Wert kann auch > 0,10 bis ≤ 0,26 oder auch > 0,15 bis ≤ 0,20 betragen. Die Temperatur kann zwischen ≥ 20 °C und ≤ 80 °C liegen.

In einer weiteren Ausführungsform des erfindungsgemäßen Verfahrens liegen die Komponenten A), B), C), und D) in den folgenden Mengen vor:
A) ≥ 25 Gewichts-% bis < 30 Gewichts-%
B) > 4 Gewichts-% bis < 15 Gewichts-%
C) ≥ 5 Gewichts-% bis < 40 Gewichts-%
D) ≥ 30 Gewichts-% bis < 60 Gewichts-%.

Hierbei addieren sich die Angaben in Gewichts-% zu < 100 Gewichts-%. Bevorzugte Mengen der Komponenten sind:
A) > 27 Gewichts-% bis < 29 Gewichts-%
B) ≥ 8 Gewichts-% bis ≤ 12 Gewichts-%
C) ≥ 8 Gewichts-% bis ≤ 20 Gewichts-%
D) ≥ 40 Gewichts-% bis ≤ 50 Gewichts-%.

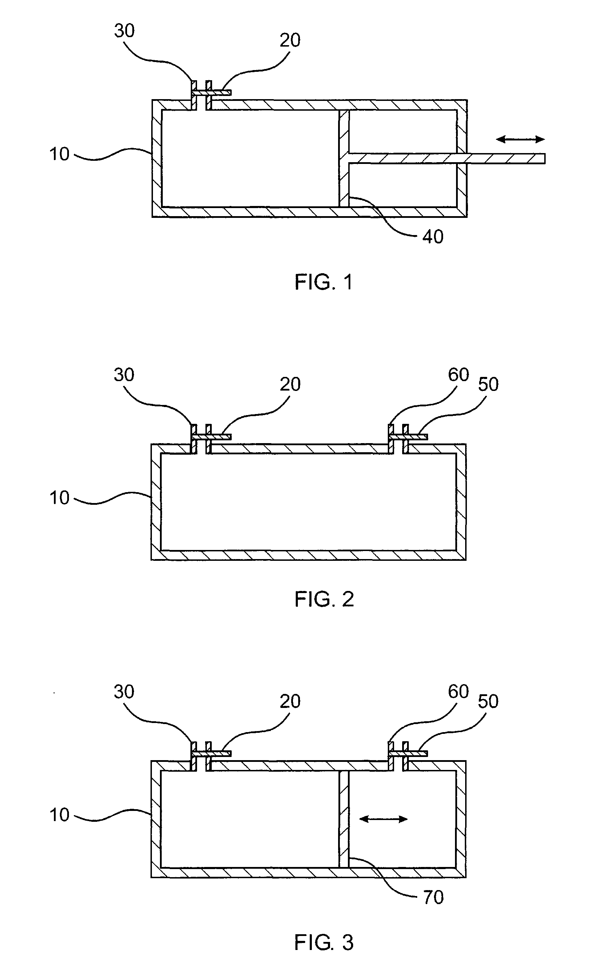

In einer weiteren Ausführungsform des erfindungsgemäßen Verfahrens umfasst die geschlossene Form, in die die Mischung umfassend die Komponenten A), B), C) und D) eingebracht wird, ein durch eine bewegliche Dichtung begrenztes inneres Volumen zur Aufnahme der Mischung und die Lage der beweglichen Dichtung kann durch mechanischen Druck und/oder durch Fluiddruck verändert werden. Auf diese Weise erfolgt die externe Beeinflussung des Volumens und des Drucks im Inneren der Form. Diese Ausführungsform wird beispielhaft in Verbindung mit den Figuren 1 und 3 weiter erläutert werden.

Ein weiterer Gegenstand der vorliegenden Erfindung ist ein Polyurethanschaum, welcher durch ein erfindungsgemäßes Verfahren erhältlich ist. Zu Details des Verfahrens wird auf die obigen Ausführen verwiesen. Der erfindungsgemäße Schaum kann beispielsweise eine Rohdichte gemäß DIN EN 1602 von ≥ 10 kg/m³ bis ≤ 300 kg/m³ und vorzugsweise von ≥ 20 kg/m³ bis ≤ 100 kg/m³ aufweisen. Bevorzugte Verwendungen für den erfindungsgemäßen Schaum liegen in der Wärmeisolierung.

Der erfindungsgemäße Schaum liegt trotz geringer Dichte nicht in Form eines Aerogels vor. Aerogele, wie sie beispielsweise in WO 2006/128872 A1 und den darin zitierten Druckschriften beschrieben sind, werden dadurch erhalten, dass beim Trocknungsschritt ein Fluid im superkritischen Zustand aus dem Gelkörper entfernt wird. Hierbei wird jedoch kein Schaum erhalten. Es entstehen sphärische partikuläre Strukturen.

In einer Ausführungsform des erfindungsgemäßen Polyurethanschaums liegt dieser als Schaum mit einem mittleren Porendurchmesser von ≥ 10 nm bis ≤ 10000 nm vor. Der Porendurchmesser kann auch ≥ 20 nm bis < 1000 nm und ≥ 40 mn bis ≤ 800 mm betragen. Vorzugsweise wird der Porendurchmesser mittels Elektronenmikroskopie und Vermessen der Poren bestimmt. Alternative Verfahren sind die Bestimmung durch Quecksilberintrusion (DIN 66133) und Stickstoffsorption (DIN 66134).

In einer weiteren Ausführungsform des erfindungsgemäßen Polyurethanschaums weist dieser eine Porendichte von > 10⁷ Poren/cm³ bis ≤ 10¹⁸ Poren/cm³ auf. Die Porendichte wird mittels Elektronenmikroskopie bestimmt. Dabei wird auf einer repräsentativen Querschnittsfläche des Schaumes die Anzahl der Poren pro Flächeneinheit bestimmt und auf das Volumen hochgerechnet. Die Porendichte kann auch in einem Bereich von ≥ 10⁹ Poren/cm³ bis ≤ 10¹⁶ Poren/cm³ und vorzugsweise > 10¹² Poren/cm³ bis < 10¹⁴ Poren/cm³ liegen.

In einer weiteren Ausführungsform des erfindungsgemäßen Polyurethanschaums weist dieser eine Wärmeleitfähigkeit von > 6 mW/m K bis < 30 mW/m K auf. Diese kann mittels DIN 52616 bestimmt werden und auch in einem Bereich von ≥ 8 mW/m K bis ≤ 25 mW/m K und vorzugsweise > 10 mW/m K bis < 20 mW/m K liegen. Vorzugsweise handelt es sich bei diesem Schaum um einen rein mit CO₂ getriebenen Schaum. Mit anderen Worten ist die zur Herstellung dieses Schaums eingesetzte Treibmittelkomponente ausschließlich CO₂.

Die vorliegende Erfindung wird anhand der nachfolgenden Beispiele in Verbindung mit den Figuren weiter erläutert. Es zeigen:
FIG. 1 bis 3 erfindungsgemäß einsetzbare geschlossene Formen
FIG. 4 eine Auftragung der Temperatur T gegen den Tensidgehalt γ für das in Beispiel 1 charakterisierte System
FIG. 5 eine Auftragung der Temperatur T gegen den Tensidgehalt γ für das in Beispiel 2 charakterisierte System
FIG. 6 und 7 Rasterelektronenmikroskop-Aufnahmen des in Beispiel 3 erhaltenen Schaums
FIG. 8 und 9 Rasterelektronenmikroskop-Aufnahmen des in Beispiel 4 erhaltenen Schaums

FIG. 1 zeigt eine erfindungsgemäß einsetzbare geschlossene Form. Die Form weist ein äußeres Gehäuse 10 auf mit einer schematisch dargestellten, durch Absperreinrichtung 20 verschließbaren Einfüllöffnung 30. Die Mischung umfassend die benötigten Reaktionskomponenten wird hierüber in die Form eingetragen. Eine kolbenartig ausgeführte Dichtung 40 lässt sich innerhalb des Gehäuses 10 bewegen. Auf diese Weise wird innerhalb der Form ein von der Dichtung 40 begrenztes Volumen zur Aufnahme der Reaktionsmischung geschaffen. Die Lage der Dichtung 40 innerhalb des Gehäuses kann durch Verschieben mittels der aus dem Gehäuse 10 herausragenden stangenförmigen Fortsetzung der Dichtung 40, also durch mechanischen Druck, erreicht werden.

FIG. 2 zeigt eine weitere erfindungsgemäß einsetzbare geschlossene Form. Die Form weist ebenfalls ein äußeres Gehäuse 10 mit einer schematisch dargestellten, durch Absperreinrichtung 20 verschließbaren Einfüllöffnung 30 auf. Die Mischung umfassend die benötigten Reaktionskomponenten wird hierüber in die Form eingetragen. Die externe Beeinflussung des Drucks in der Form erfolgt durch Anlegen eines Gasdrucks über eine weitere Ventileinrichtung 60. Diese ist schematisch dargestellt und mittels Absperreinrichtung 50 bei Bedarf verschließbar. Es ist ebenfalls im Rahmen der vorliegenden Erfindung denkbar, dass die Einfüllöffnung 30 und die Ventileinrichtung 60 miteinander kombiniert werden. Beispielsweise kann dann ein an der Einfüllöffnung 30 angesetzter Mischkopf auch gleichzeitig die Form mit Gasdruck beaufschlagen.

FIG. 3 zeigt eine weitere erfindungsgemäß einsetzbare geschlossene Form. Die Form weist ebenfalls ein äußeres Gehäuse 10 mit einer schematisch dargestellten, durch Absperreinrichtung 20 verschließbaren Einfüllöffnung 30 auf. Die Mischung umfassend die benötigten Reaktionskomponenten wird hierüber in die Form eingetragen. Eine frei bewegliche oder auch als frei schwimmende Dichtung 70 befindet sich innerhalb des Gehäuses 10. Auf diese Weise wird innerhalb der Form ein von der Dichtung 40 begrenztes Volumen zur Aufnahme der Reaktionsmischung geschaffen (Reaktionsvolumen). Auf der anderen Seite der Dichtung 70 wird ein weiteres Volumen innerhalb der Form 10 erhalten, welches hier als Arbeitsvolumen bezeichnet werden soll. Im Gegensatz zu der in FIG. 1 gezeigten Form wird die Lage der Dichtung nicht durch mechanischen Druck, sondern durch Gasdruck verändert. Über eine Ventileinrichtung 60, die bei Bedarf mit Absperreinrichtung 50 verschließbar ist, wird in dem Arbeitsvolumen der Druck angelegt. Auf diese Weise kann das Arbeitsvolumen relativ zum Reaktionsvolumen vergrößert oder verkleinert werden. Dieses geht einher mit einer Vergrößerung oder Verringerung des Drucks im Reaktionsvolumen. Selbstverständlich können nicht nur Gase mittels Ventileinrichtung 60 in das Arbeitsvolumen eingeleitet werden, sondern auch andere Fluide wie zum Beispiel Hydraulikflüssigkeiten.

In den Beispielen und Figuren gibt der Wert α den relativen Gewichtsanteil des Treibmittels, also der unpolaren Phase, in der Polyol/Treibmittelmischung an. Der Wert Ψ bezeichnet die Massenbrüche der einzelnen Komponenten in der polaren Phase. Der Wert γ bezeichnet den relativen Gewichtsanteil der Tensidkomponente an der Gesamtzusammensetzung. In den Figuren bedeuten die Bezugszeichen 1 ein einphasiges Gebiet, in dem Mikroemulsionen auftreten, 2 ein zweiphasiges Gebiet, wobei das Tensid in der polaren Phase gelöst ist und 2̅ ein zweiphasiges Gebiet, in dem das Tensid in der unpolaren Phase gelöst ist.

Die einzelnen Beispiele betreffen jeweils bestimmte Polyol/Treibmittel/Tensidsysteme. Innerhalb der Beispiele wurden verschiedene Rezepturen mit unterschiedlichen Anteil α des Treibmittels näher charakterisiert. Bei jeweils konstantem Anteil α wurde der Anteil γ der Tensidkomponente verändert. Die Zusammensetzung der Tensidkomponente selber wurde in den jeweiligen Beispielen konstant gehalten. Die Temperatur des Systems wurde notiert und Verbindungslinien zwischen den Messpunkten interpoliert, um die Grenzen zwischen den ein-, zwei- und dreiphasigen Gebieten zu bestimmen. Auf diese Weise wurde ein Diagramm erhalten, welches einem Kahlweit-Fisch-Diagramm (M. Kahlweit, R. Strey, Angewandte Chemie International Edition, Band 28(8), Seite 654 (1985)) vergleichbar ist. Von besonderem Interesse für die Charakterisierung des Systems ist der Schnittpunkt der Verbindungslinien. Bei bekannter Lage des Schnittpunkts im Koordinatensystem von γ und T kann man bei einem geringfügig größeren Tensidanteil γ eine Mikroemulsion erwarten.

Die in den Beispielen verwendeten Substanznamen haben die folgende Bedeutung:
Desmophen® VP.PU 1431: Difunktionelles Polyesterpolyol der Firma Bayer MaterialScience AG, OH-Zahl 310 mg KOH/g
TCPP: Tris(2-chlorisopropyl)-phosphat
Q2-5211®: Siloxylierter Polyethylenoxidpolyether der Firma Dow Corning, 3-(Polyoxyethylen)propylheptamethyltrisiloxan, Endgruppen: OH und Heptamethyltrisiloxan, 32% Siloxangruppen, 68% Ethylenoxideinheiten; HLB-Wert des EO-Anteils: 11,5
Desmorapid® 726b: Katalysator der Firma Bayer MaterialScience AG
DBTL: Dibutylzinndilaurat
Desmodur® 44V70L: Gemisch von Diphenylmethan-4,4'-diisocyanat (MDI) mit Isomeren und höherfunktionellen Homologen der Firma Bayer MaterialScience AG
Desmodur® 85/25: Gemisch von Diphenylmethan-4,4'-diisocyanat (MDI) mit Isomeren und höherfunktionellen Homologen der Firma Bayer MaterialScience AG

### Beispiel 1

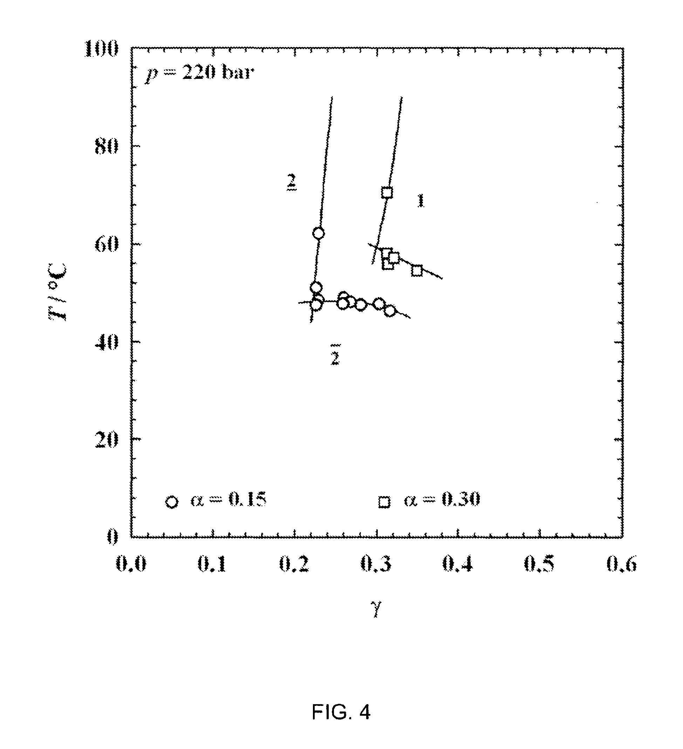

In diesem Beispiel wurde für die Tensidkomponente Q2-5211® eingesetzt. Als Treibmittel wurde überkritisches CO₂ (scCO₂) verwendet. Die Polyolkomponente war eine Mischung aus 80 Gewichtsteilen Desmophen® VP.PU 1431, 15 Gewichtsteilen Glycerin und 15 Gewichtsteilen TCPP. Dieses entspricht Massenbrüchen von Ψ_{VP.PU 1431} = 0,728, Ψ_{Glycerin} = 0,136 und Ψ_{TCPP} = 0,136. Es wurden Rezepturen mit α = 0,15 und α = 0,30 angesetzt. Der Druck in diesem Beispiel betrug 22 MPa (220 bar). Die Ergebnisse sind in FIG. 4 wiedergegeben. Am Schnittpunkt der Verbindungslinien im Phasendiagramm wurden die folgenden Parameter ermittelt:

| α-Wert | γ-Wert | Temperatur am Schnittpunkt |
|---|---|---|
| 0,15 | 0,22 | 48 °C |
| 0,30 | 0,29 | 58 °C |

### Beispiel 2

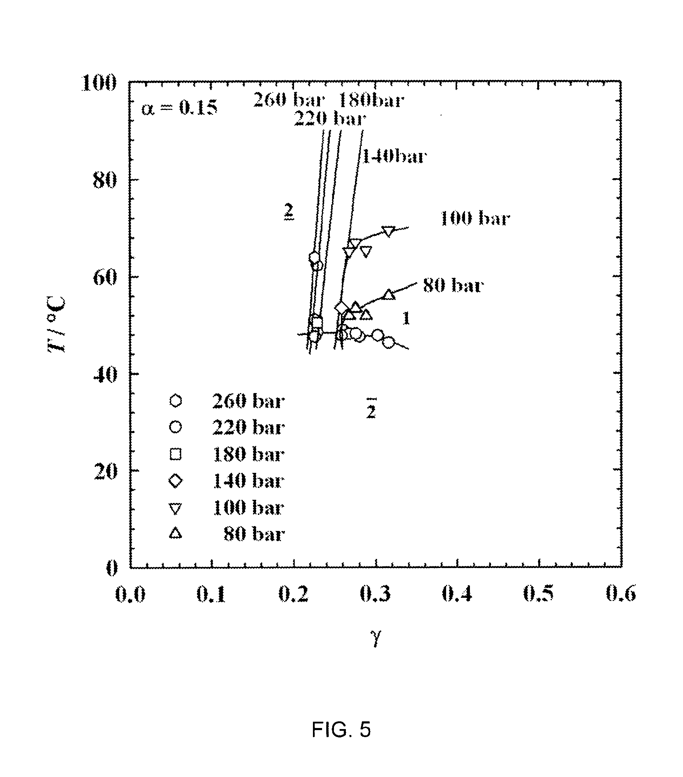

Hier wurde dasselbe System wie in Beispiel 1, also Q2-5211®, überkritisches CO₂ und als Polyolkomponente eine Mischung aus 80 Gewichtsteilen Desmophen® VP.PU 1431, 15 Gewichtsteilen Glycerin und 15 Gewichtsteilen TCPP eingesetzt. Dieses entspricht wieder Massenbrüchen von Ψ_{VP.PU 1431} = 0,728, Ψ_{Glycerin} = 0,136 und Ψ_{TCPP} = 0,136. Bei einem α-Wert von 0,15 wurde der Druck variiert. Die Ergebnisse sind in FIG. 5 wiedergegeben. Aus diesem Beispiel lässt sich die Erkenntnis ableiten, dass die Lage des Mikroemulsionsbereichs durch Veränderung des Drucks angepasst werden kann. Am Schnittpunkt der Verbindungslinien im Phasendiagramm wurden die folgenden Parameter ermittelt:

| Druck | γ-Wert | Temperatur am Schnittpunkt |
|---|---|---|
| 26MPa (260 bar) | 0,22 | 48 °C |
| 22MPa (220 bar) | 0,23 | 48 °C |
| 18MPa (180 bar) | 0,23 | 48 °C |
| 14MPa (140 bar) | 0,25 | 48 °C |
| 10MPa (100 bar) | 0,25 | 48 °C |
| 8MPa (80 bar) | 0,26 | 48 °C |

### Beispiel 3

Eine gemäß der Lehre aus Beispielen 1 und 2 erhältliche Mikroemulsion wurde zu einem Polyurethanschaum umgesetzt. Hierbei wurde die Mischung aus Polyolen, TCPP und Tensid bei 58 °C und einem Druck von 170 bar mit CO₂ versetzt. Ohne auf eine Theorie beschränkt zu sein, wird angenommen, dass sich hierbei eine Mikroemulsion von scCO₂-Tröpfchen in der Polyolphase bildete. Diese Emulsion wurde in einem Hochdruck-Mischkopf mit dem Polyisocyanat versetzt. Anschließend wurde die Reaktionsmischung in eine Form mit einem Gegendruck von 80 bar eingebracht. Folglich herrschten bezüglich des CO₂ in der Form immer noch überkritische Bedingungen. Erst nach dem Einbringen in die auf 60°C temperierte Form und einer gewissen Verweilzeit wurde der Druck auf Normaldruck gesenkt.

Die Rezeptur lautete wie folgt:

| Komponente | OH-Zabl | Gewichtsteile | Gewichts-% |
|---|---|---|---|
| Desmophen® VP.PU 1431 | 310 mg KOH/g | 80 | 23,49% |
| Glycerin | 1827 mg KOH/g | 15 | 4,41% |
| TCPP | 0 | 15 | 4,41% |
| Q2-5211® | nicht bestimmt | 45 | 13,22% |
| Desmorapid ® 726b | 0 | 0,30 | 0,09% |
| CO₂ | 0 | 24,69 | 7,25% |
| Desmodur® 44V70L (NCO-Gehalt 30,9 Gew.-%) | | 160,53 | 47,14% |

### Reaktionsparameter:

| | |
|---|---|
| Isocyanattemperatur: | 58 °C |
| Polyoltemperatur: | 58 °C |
| Mischzeit: | 2 Sekunden |
| Gegendruck: | 8MPa (80 bar) |
| Entformzeit: | 10 Minuten |
| Entspannung: | nach 10 Minuten |
| γ-Wert: | 0,13 |
| α-Wert: | 0,08 |

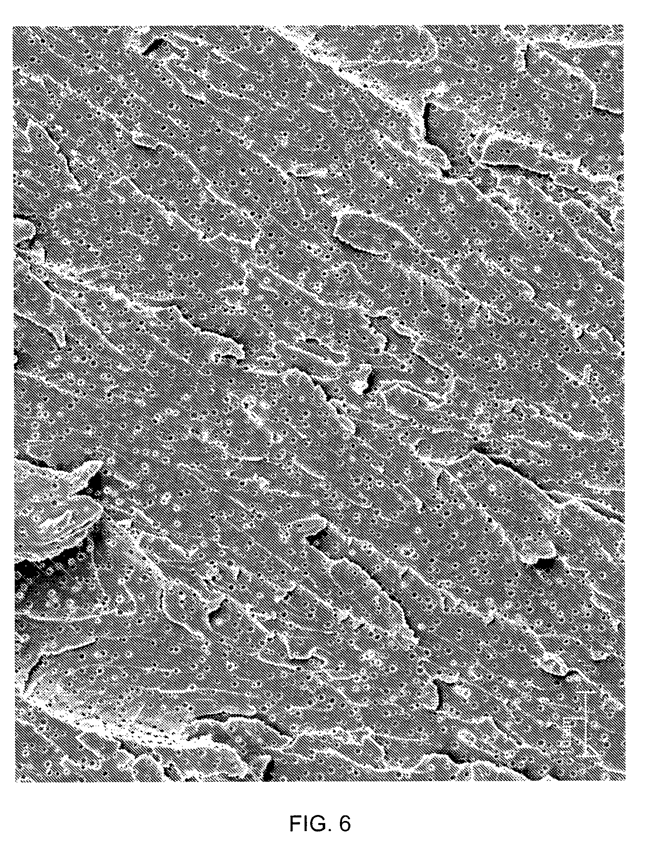

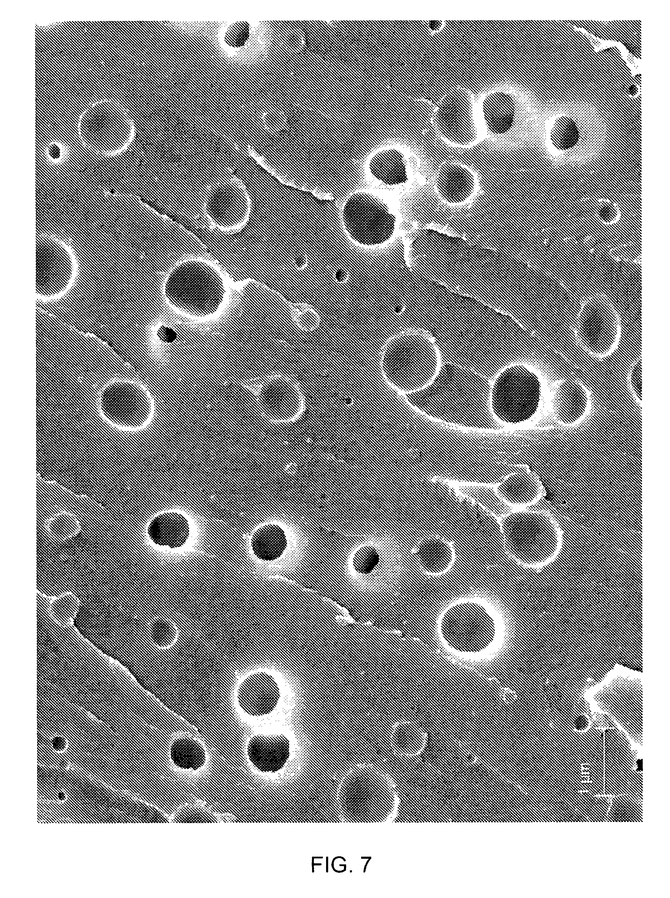

Die α- und γ-Werte sind inklusive dem Isocyanat berechnet worden. Das Schussgewicht betrug insgesamt 120 Gramm. Der erhaltene Schaum wurde mittels Rasterelektronenmikroskopie untersucht. FIG. 6 und 7 zeigen Rasterelektronen-Mikroskopaufuahmen bei unterschiedlichen Maßstäben. Man erkennt, dass in dem gebildeten Schaum Poren mit einem Durchmesser von deutlich weniger als 1 µm gebildet haben. Der durchschnittliche Porenradius betrug 240 ± 79 nm. Die durchschnittliche Anzahldichte der Poren betrug 2,2 · 10¹¹. Ohne auf eine Theorie festgelegt zu sein, wird angenommen, dass die Zellen im Schaum durch Oswald-Reifung während der Polymerisation größer als in der ursprünglichen Mikroemulsion wurden.

### Beispiel 4

| Komponente | OH-Zahl | Gewichtsteile | Gewichts-% |
|---|---|---|---|
| Desmophen® VP.PU 1431 | 310 mg KOH/g | 80 | 26,31% |
| Glycerin | 1827 mg KOH/g | 15 | 4,93% |
| TCPP | 0 | 15 | 4,93% |
| Q2-5211® | nicht bestimmt | 45 | 14,80% |
| Desmorapid ® 726b | 0 | 0,30 | 0,10% |
| DBTL | 0 | 0,06 | 0,02 |
| CO₂ | 0 | 22,04 | 7,25% |
| Desmodur® 85/25 (NCO-Gehalt 32,6 Gew.-%) | | 126,64 | 41,65% |

### Reaktionsparameter:

| | |
|---|---|
| Isocyanattemperatur: | 34 °C |
| Polyoltemperatur: | 33 °C |
| Mischzeit: | 2 Sekunden |
| Gegendruck: | 10MPa (100 bar) |
| Entformzeit: | 10 Minuten |
| Entspannung: | nach 10 Minuten |
| γ-Wert: | 0,15 |
| α-Wert: | 0,09 |

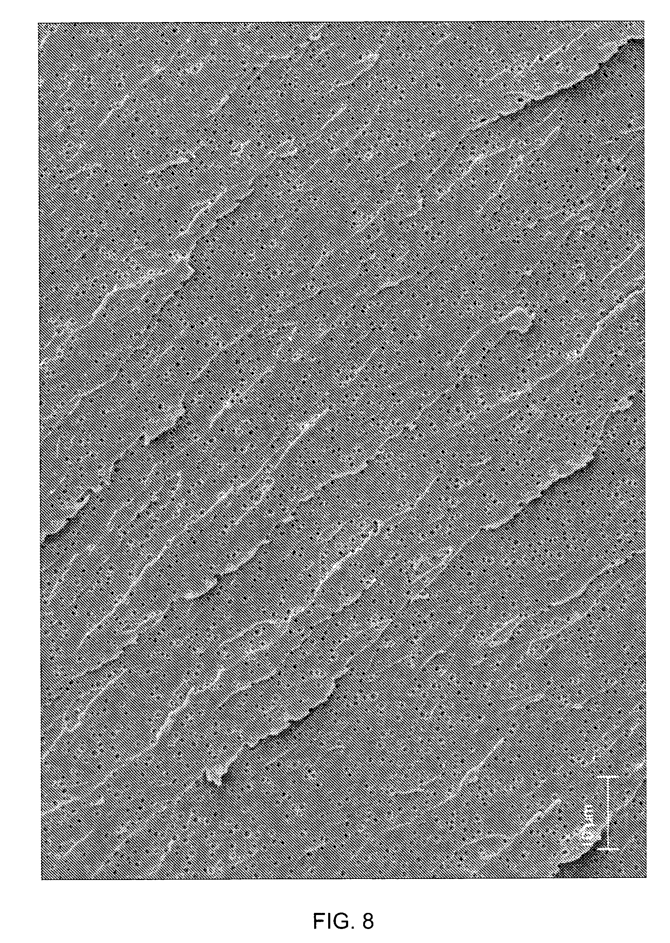

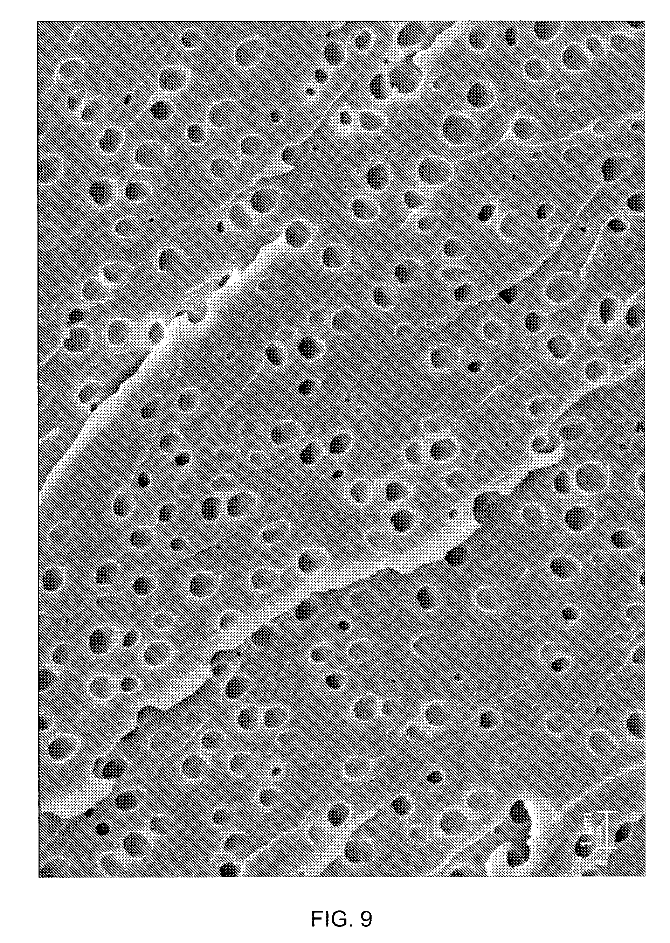

Die α- und γ-Werte sind inklusive dem Isocyanat berechnet worden. Das Schussgewicht betrug insgesamt 120 Gramm. Der erhaltene Schaum wurde mittels Rasterelektronenmikroskopie untersucht. FIG. 8 und 9 zeigen Rasterelektronen-Mikroskopaufnahmen bei unterschiedlichen Maßstäben. Man erkannt, dass in dem gebildeten Schaum Poren mit einem Durchmesser von deutlich weniger als 1 µm gebildet haben. Der durchschnittliche Porenradius beträgt 180 ± 59 nm. Die durchschnittliche Anzahldichte der Poren beträgt 3,6 · 10¹¹. Ohne auf eine Theorie festgelegt zu sein, wird angenommen, dass die Zellen im Schaum durch Oswald-Reifung während der Polymerisation größer als in der ursprünglichen Mikroemulsion wurden.

## Patentansprüche

1. Verfahren zur Herstellung eines Polyurethanschaums, umfassend die Schritte:
- Bereitstellen einer Mischung, umfassend:
A) eine gegenüber Isocyanaten reaktive Komponente;
B) eine Tensidkomponente;
C) eine Treibmittelkomponente ausgewählt aus der Gruppe umfassend lineare, verzweigte oder cyclische C₁- bis C₆-Alkane, lineare, verzweigte oder cyclische C₁-bis C₆-Fluoralkane, N₂, O₂, Argon und/oder CO₂, wobei die Treibmittelkomponente C) im überkritischen oder nahekritischen Zustand vorliegt;
D) eine Polyisocyanatkomponente;
- Einbringen der Mischung umfassend die Komponenten A), B), C) und D) in eine geschlossene Form, wobei die geschlossene Form so eingerichtet ist, dass deren inneres Volumen und/oder der in ihrem Inneren herrschende Druck nach dem Einbringen der Mischung durch externe Beeinflussung verändert werden kann;
- Verweilen der Mischung umfassend die Komponenten A), B) C) und D) in der geschlossenen Form für eine vorbestimmte Zeitdauer von ≥ 0 Sekunden; und
- Vergrößern des inneren Volumens der geschlossenen Form und/oder Verringern des im Inneren der geschlossenen Form herrschenden Drucks durch externe Beeinflussung.

2. Verfahren gemäß Anspruch 1, wobei beim Verweilen der Mischung umfassend die Komponenten A), B), C) und D) die Treibmittelkomponente C) im überkritischen oder nahekritischen Zustand vorliegt und wobei weiterhin nach dem Vergrößern des inneren Volumens der geschlossenen Form und/oder Verringern des im Inneren der geschlossenen Form herrschenden Drucks die Treibmittelkomponente C) nicht mehr im überkritischen Zustand vorliegt.

3. Verfahren gemäß Anspruch 1, wobei nach dem Vermischen der Komponenten A), B), C), und D) ein Druck von ≥ 4 MPa bis ≤ 15 MPa (≥ 40 bar bis ≤ 150 bar) herrscht.

4. Verfahren gemäß Anspruch 1, wobei die Komponente A) ein Polyesterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g umfasst.

5. Verfahren gemäß Anspruch 1, wobei die Tensidkomponente B) ein Polyethylenoxid-Polyether mit Oligodimethylsiloxan-Endgruppen umfasst, wobei die Zahl der Dimethylsiloxan-Einheiten ≤ 5 ist.

6. Verfahren gemäß Anspruch 1, wobei die Tensidkomponente einen HLB-Wert von ≥ 10 bis ≤ 18 aufweist.

7. Verfahren gemäß Anspruch 1, wobei die Tensidkomponente B) kovalent an eine gegenüber Isocyanaten reaktive Verbindung oder an ein Polyisocyanat gebunden vorliegt.

8. Verfahren gemäß Anspruch 1, wobei die Polyisocyanatkomponente D) monomeres und/oder polymeres Diphenylmethan-4,4'-diisocyanat umfasst.

9. Verfahren gemäß Anspruch 1, wobei in der Mischung umfassend die Komponenten A), B) und C) der relative Gewichtsanteil γ der Tensidkomponente B) an der Gesamtzusammensetzung ≥ 0,05 bis ≤ 0,3 beträgt.

10. Verfahren gemäß Anspruch 1, wobei die Komponenten A), B), C), und D) in den folgenden Mengen vorliegen:
A) ≥ 25 Gewichts-% bis ≤ 30 Gewichts-%
B) ≥ 4 Gewichts-% bis ≤ 15 Gewichts-%
C) ≥ 5 Gewichts-% bis ≤ 40 Gewichts-%
D) ≥ 30 Gewichts-% bis ≤ 60 Gewichts-%.

11. Verfahren gemäß Anspruch 1, wobei die geschlossene Form, in die die Mischung umfassend die Komponenten A), B), C) und D) eingebracht wird, ein durch eine bewegliche Dichtung (40, 70) begrenztes inneres Volumen zur Aufnahme der Mischung umfasst und wobei die Lage der beweglichen Dichtung (40, 70) durch mechanischen Druck und/oder durch Fluiddruck verändert werden kann.

12. Polyurethanschaum, ausgenommen Aerogele, erhältlich durch ein Verfahren gemäß Anspruch 1.

13. Polyurethanschaum gemäß Anspruch 12, vorliegend als Schaum mit einem mittleren Porendurchmesser von ≥ 10 nm bis ≤ 10000 nm.

14. Polyurethanschaum gemäß Anspruch 12 mit einer Porendichte von ≥ 10⁷ Poren/cm³ bis ≤ 10¹⁸ Poren/cm³.

15. Polyurethanschaum gemäß Anspruch 12 mit einer Wärmeleitfähigkeit von ≥ 6 mW/m K bis ≤ 30 mW/m K.

## Claims

1. Process for producing a polyurethane foam, comprising the following steps:
- providing a mixture comprising:
A) a component reactive towards isocyanates;
B) a surfactant component;
C) a blowing agent component selected from the group consisting of linear, branched or cyclic C₁- to C₆-alkanes, linear, branched or cyclic C₁- to C₆-fluoroalkanes, N₂, O₂, argon and/or CO₂, where blowing agent component C) is present in the supercritical or near-critical state;
D) a polyisocyanate component;
- introducing the mixture comprising components A), B), C), and D) into a closed mould, where the closed mould has been set up in such a way that its interior volume and/or the pressure prevailing in its interior can be altered after introducing the mixture by external influence;
- providing a predetermined period of residence time of ≥ 0 seconds for the mixture comprising components A), B), C), and D) in the closed mould; and
- enlarging the interior volume of the closed mould and/or reducing the pressure prevailing in the interior of the closed mould by external influence.

2. Process according to Claim 1, where during the residence time of the mixture comprising components A), B), C) and D), blowing agent component C) is present in the supercritical or near-critical state, and where, furthermore, after the enlargement of the interior volume of the closed mould and/or reduction of the pressure prevailing in the interior of the closed mould, blowing agent component C) is no longer present in the supercritical state.

3. Process according to Claim 1, where the prevailing pressure after the mixing of components A), B), C), and D) is from ≥ 4 MPa to ≤ 15 MPa (≥40 bar to ≤ 150 bar).

4. Process according to Claim 1, where component A) comprises a polyester polyol with a hydroxy number from ≥ 200 mg KOH/g to ≤ 600 mg KOH/g and a short-chain polyol with a hydroxy number of ≥ 800 mg KOH/g.

5. Process according to Claim 1, where surfactant component B) is a polyethylene oxide-polyether having oligodimethylsiloxane end groups, where the number of the dimethylsiloxane units is ≤ 5.

6. Process according to Claim 1, where the HLB value of the surfactant component is from ≥ 10 to ≤ 18.

7. Process according to Claim 1, where surfactant component B) is present in a form covalently bonded to a compound reactive towards isocyanates or to a polyisocyanate.

8. Process according to Claim 1, where polyisocyanate component D) comprises monomeric and/or polymeric diphenylmethane 4,4'-diisocyanate.

9. Process according to Claim 1, where the relative proportion by weight y of surfactant component B) in the mixture comprising components A), B) and C) is from ≥ 0.05 to ≤ 0.3, based on the entire composition.

10. Process according to Claim 1, where the amounts present of components A), B), C), and D) are as follows:
A) from ≥ 25% by weight to ≤ 30% by weight
B) from ≥ 4% by weight to ≤ 15% by weight
C) from ≥ 5% by weight to ≤ 40% by weight
D) from ≥ 30% by weight to ≤ 60% by weight.

11. Process according to Claim 1, where the closed mould into which the mixture comprising components A), B), C) and D) is introduced comprises, in order to accommodate the mixture, an interior volume restricted by a movable seal (40, 70), and where the position of the movable seal (40, 70) can be altered by mechanical pressure and/or by fluid pressure.

12. Polyurethane foam, with the exception of aerogels, obtainable by a process according to Claim 1.

13. Polyurethane foam according to Claim 12, present in the form of foam with an average pore diameter of from ≥ 10 nm to ≤ 10 000 nm.

14. Polyurethane foam according to Claim 12 with a pore density of from ≥ 10⁷ pores/cm³ to ≤ 10¹⁸ pores/cm³.

15. Polyurethane foam according to Claim 12 with a thermal conductivity of from ≥ 6 mW/m K to ≤ 30 mW/m K.

## Revendications

1. Procédé pour la production d'une mousse de polyuréthane, comprenant les étampes :
- disposition d'un mélange, comprenant :
A) un composant réactif vis-à-vis d'isocyanates ;
B) un composant tensioactif ;
C) un composant porogène choisi dans le groupe comprenant des alcanes en C₁-C₆ linéaires, ramifiés ou cycliques, des fluoroalcanes en C₁-C₆ linéaires, ramifiés ou cycliques, N₂, O₂, l'argon et/ou CO₂, le composant porogène C) se trouvant à l'état supercritique ou quasi critique ;
D) un composant polyisocyanate ;
- introduction du mélange comprenant les composants A), B), C) et D) dans un moule fermé, le moule fermé étant conçu de manière que son volume interne et/ou la pression régnant à l'intérieur de celui-ci puisse(nt) après l'introduction du mélange être modifié(e) (s) sous l'effet d'un moyen externe ;
- maintien du mélange comprenant les composants A), B), C) et D) dans le moule fermé pendant une durée préétablie de ≥ 0 seconde ; et
- agrandissement du volume interne du moule fermé et/ou diminution de la pression régnant à l'intérieur du moule fermé, sous l'effet d'un moyen externe.

2. Procédé selon la revendication 1, dans lequel lors du maintien du mélange comprenant les composants A), B), C) et D) le composant porogène C) se trouve à l'état supercritique ou quasi critique et dans lequel en outre après l'agrandissement du volume interne du moule fermé et/ou la diminution de la pression régnant à l'intérieur du moule fermé le composant porogène C) ne se trouve plus à l'état supercritique.

3. Procédé selon la revendication 1, dans lequel après le mélange des composants A), B), C) et D) il règne une pression de ≥ 4 MPa à ≤ 15 MPa (≥ 40 bars à ≤ 150 bars).

4. Procédé selon la revendication 1, dans lequel le composant A) comprend un polyesterpolyol ayant un indice de groupes hydroxy de ≥ 200 mg de KOH/g à ≤ 600 mg de KOH/g et un polyol à courte chaîne ayant un indice de groupes hydroxy de ≥ 800 mg de KOH/g.

5. Procédé selon la revendication 1, dans lequel le composant tensioactif B) est un polyoxyéthylène-polyéther comportant des groupes terminaux oligodiméthylsiloxane, dans lequel le nombre des motifs diméthylsiloxane est ≤ 5.

6. Procédé selon la revendication 1, dans lequel le composant tensioactif présente une valeur HLB de ≥ 10 à ≤ 18.

7. Procédé selon la revendication 1, dans lequel le composant tensioactif B) se trouve lié par covalence à un composé réactif vis-à-vis d'isocyanates ou à un polyisocyanate.

8. Procédé selon la revendication 1, dans lequel le composant polyisocyanate D) comprend du diphényl-méthane-4,4'-diisocyanate monomère et/ou polymère.

9. Procédé selon la revendication 1, dans lequel dans le mélange comprenant les composants A), B) et C) la proportion pondérale relative γ du composant tensioactif B) par rapport à la composition totale vaut de ≥ 0,05 à ≤ 0,3.

10. Procédé selon la revendication 1, dans lequel les composants A), B), C) et D) se trouvent en les quantités suivantes :
A) ≥ 25 % en poids à ≤ 30 % en poids
B) ≥ 4 % en poids à ≤ 15 % en poids
C) ≥ 5 % en poids à ≤ 40 % en poids
D) ≥ 30 % en poids à ≤ 60 % en poids.

11. Procédé selon la revendication 1, dans lequel le moule fermé, dans lequel on introduit le mélange comprenant les composants A), B), C) et D), comprend un volume interne, limité par un obturateur mobile (40, 70), destiné à recevoir le mélange et dans lequel la position de l'obturateur mobile (40, 70) peut être modifiée par pression mécanique et/ou par pression hydraulique.

12. Mousse de polyuréthane, à l'exclusion d'aérogels, pouvant être obtenue par un procédé selon la revendication 1.

13. Mousse de polyuréthane selon la revendication 12, présente sous forme de mousse ayant un diamètre moyen de pore de ≥ 10 nm à ≤ 10 000 nm.

14. Mousse de polyuréthane selon la revendication 12, ayant une densité de pores de ≥ 10⁷ pores/cm³ à ≤ 10¹⁸ pores/cm³.

15. Mousse de polyuréthane selon la revendication 12, ayant une conductivité thermique de ≥ 6 mW/m K à ≤ 30 mW/m K.
